# EUROPÄISCHE PATENTSCHRIFT

(11) **EP 2 948 963 B1**
(45) Veröffentlichungstag und Bekanntmachung des Hinweises auf die Patenterteilung: **01.04.2020**
(21) Anmeldenummer: 14704277.4
(22) Anmeldetag: 24.01.2014
(51) Int. Cl.: H01F 7/127, H01F 7/128

(54) **DURCH EINEN ELEKTROMAGNETEN BETÄTIGTES GERÄT MIT GEKAPSELTER GEWINDEVERBINDUNG**
DEVICE ACTUATED BY AN ELECTROMAGNET, COMPRISING AN ENCAPSULATED THREADED CONNECTION
APPAREIL ACTIONNÉ PAR UN ÉLECTRO-AIMANT ET COMPRENANT UNE LIAISON PAR VISSAGE ENCAPSULÉE

(30) Priorität: 28.01.2013 DE 102013001425
(43) Veröffentlichungstag der Anmeldung: 02.12.2015
(73) Patentinhaber: Thomas Magnete GmbH, 57562 Herdorf (DE)
(72) Erfinder: SCHONLAU, Jürgen, 57567 Daaden (DE); GINSBERG, Benjamin, 56479 Liebenscheid (DE); ERMERT, Markus, 57299 Burbach (DE); LEINWEBER, Marc, 57290 Neunkirchen (DE)
(86) Internationale Anmeldenummer: PCT/EP2014/000183
(87) Internationale Veröffentlichungsnummer: WO 2014/114457

(56) Entgegenhaltungen:
- EP-A1- 2 325 851
- EP-A1- 2 535 626
- EP-A2- 2 299 457
- WO-A1-2009/071069
- AT-B- 395 347
- DE-A1- 10 106 429
- DE-A1- 19 956 160
- DE-A1-102006 014 020
- DE-A1-102009 050 564

## Beschreibung

Die Erfindung betrifft ein durch einen Elektromagneten betätigtes Gerät entsprechend dem Oberbegriff des Patentanspruchs.
Elektromagnete zur Betätigung von Kupplungen, Ventilen oder anderen Stellorganen sind seit vielen Jahren bekannt und weit verbreitet.
Dabei sind hinsichtlich der Schnittstelle zwischen dem Elektromagnet und dem Stellorgan zwei verschiedene Bauarten üblich, in einer ersten Bauart sind beide Bauteile untrennbar verbunden, weil sie ein gemeinsames Teil oder mehrere gemeinsame Teile enthalten. Ein gemeinsames Teil ist meist der Pol des Elektromagneten.
In einer zweiten Bauart sind die Bauteile gefügt und entweder durch Verstemmen oder Verschrauben miteinander befestigt.

Das Verschrauben bietet viele Vorteile, aber es hat den Nachteil, dass bei dem Vorgang des Verschraubens Partikel aus den Gewinden gelöst werden, die in die Funktionshohlräume der Bauteile eindringen können und dort Funktionsbeeinträchtigungen bewirken können. Befinden sich in der Nachbarschaft der Gewinde Dichtungen, so können diese Dichtungen von den Partikeln in ihrer Funktion beeinträchtigt werden oder sie können sogar beschädigt werden.
Wenn das Stellorgan ein Ventil ist, sind in der Regel Dichtungen in der Nachbarschaft der Gewinde angeordnet, und es ist bekannt, dass solche Dichtungen durch Partikel gefährdet sind.
Die Druckschriften EP 2 535 626 A1, DE 101 06 429 A1 und AT 395 347 B zeigen Elektromagnete, die jeweils eine Verschraubung mit einer benachbarten Dichtung aufweisen, die durch eine Spaltdichtung vor Partikeln aus der Verschraubung geschützt ist.

Aufgabe der vorliegenden Erfindung ist es, bei einer Verwendung einer Verschraubung zwischen den Bauteilen die Nachteile und Risiken für Eleastomerdichtungen beidseitig der Verschraubung zu vermeiden, die durch das einschraubbedingte Lösen der Partikel entstehen. Daneben soll auch eine bessere Ausrichtung der beiden Bauteile zueinander erzeugt werden, als sich durch die Gewinde allein erreichen lässt. Eine der Dichtungen soll eine Mehrzahl von Abdichtfunktionen erfüllen.

Die Aufgabenstellung wird durch die Merkmale des Patentanspruchs 1 gelöst.

Die beim Einschrauben des einen Bauteils in das andere gelösten Partikel werden in Kammern aufgenommen, die beidseitig vor und hinter den Gewinden umlaufend zwischen den Bauteilen angeordnet sind.
Diese Kammern sind im montierten Zustand auf der den Gewinden abgewandten Seite durch sehr enge Spaltdichtungen abgedichtet, die keine Partikel von gefährlicher Größe durchlassen.
Da diese Spaltdichtungen statische Dichtungen sind, können sie auch als leichte Presspassungen ausgeführt werden. Sie dienen dann nicht nur zur Abdichtung, sondern auch zur hochgenauen Ausrichtung der beiden Bauteile zueinander, denn die Gewinde allein können wegen des erforderlichen Spiels die Bauteile nicht hochgenau ausrichten.
Wenn das Stellorgan ein Ventil ist, sind in der Regel Elastomerdichtungen erforderlich, um bestimmte Räume voneinander abzudichten.
Hier wird vorteilhafterweise eine erste Elastomerdichtung eingesetzt, um sowohl den Spulenraum des Elektromagneten gegen den ersten Arbeitsanschluss des Stellorgans und gegen die Umgebung abzudichten, als auch den Arbeitsanschluss des Stellorgans gegen die Umgebung abzudichten. Dabei wird eine stellorganseitige konische Fläche genutzt, um die Elastomerdichtung an die elektromagnetseitige Begrenzung des Dichtungsraums anzudrücken. Eine zweite Elastomerdichtung dichtet vorteilhafterweise den Ankerraum des Elektromagneten gegen den Spulenraum des Elektromagneten ab.

### Vorteile:

Im Vergleich zur Ausführung der Gewindeverbindung ohne die oben beschriebenen Kammern können hier die Partikel aufgenommen werden, die beim Verschrauben der Gewinde gelöst werden.
Im Vergleich zur einer Ausführung der Gewindeverbindung ohne die oben beschriebenen Spaltdichtungen können hier die Partikel weder zu den Funktionshohlräumen noch zu den Elastomerdichtungen vordringen und diese in ihrer Funktion beeinträchtigen oder beschädigen.

### Anwendung:

Die erfindungsgemäße Ausführung der Gewindeverbindung findet in durch Elektromagnete betätigten Ventilen, Kupplungen oder anderen Stellorganen Anwendung, wie sie zum Beispiel in Fahrzeugen oder selbstfahrenden Arbeitsmaschinen eingesetzt werden.

### Bilder:

- Fig. 1: zeigt ausschnittsweise das erfindungsgemäße Gerät
- Fig. 2: zeigt die Gewindeverbindung in teilweise eingeschraubten Zustand
- Fig. 3: zeigt die Gewindeverbindung im verschraubten Zustand

### Beispielhafte Ausführung:

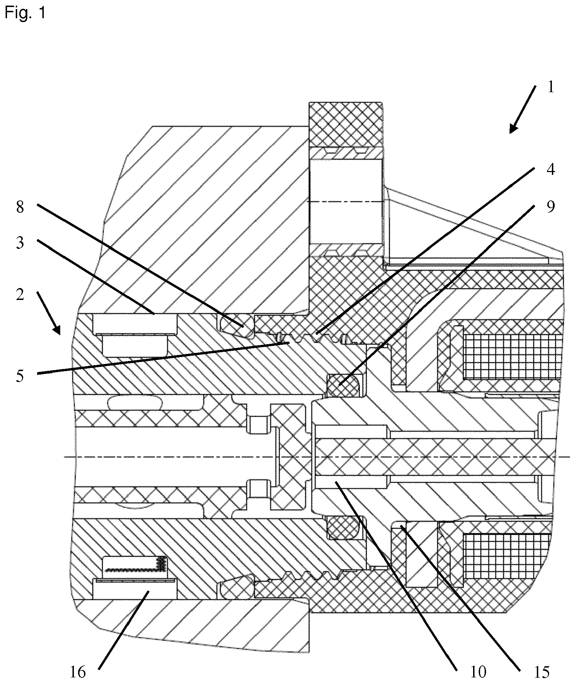

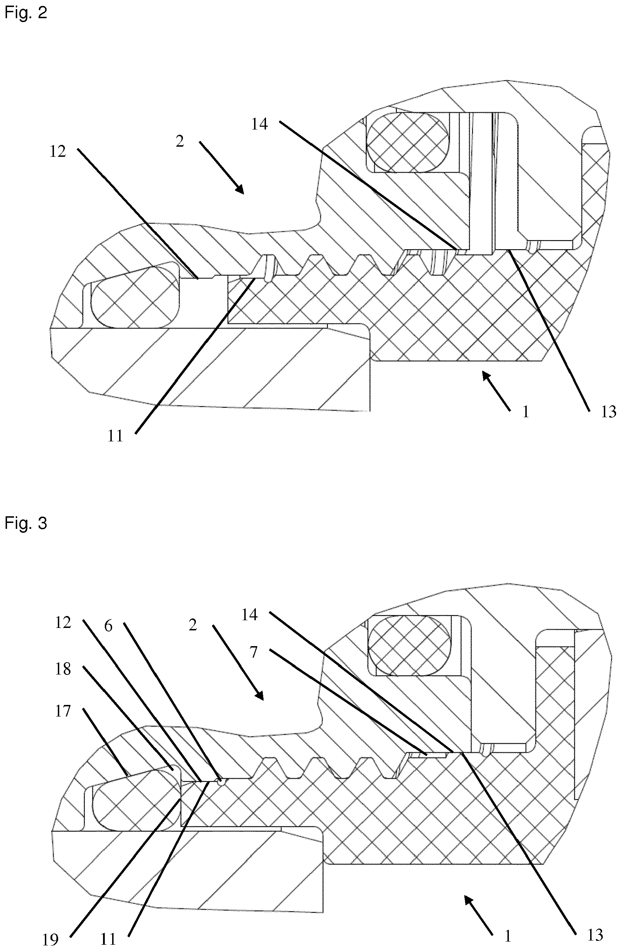

Ein erfindungsgemäßes Gerät gemäß Fig. 1 besteht aus einem Elektromagneten 1 und einem von diesem betätigten Stellorgan 2, das beispielsweise ein Ventil ist, wobei die genannten Bauteile mittels Gewinden 4 und 5 miteinander verbunden sind und diese Gewinde in Nachbarschaft und gegebenenfalls in fluidischer Verbindung mit Funktionsräumen des Elektromagneten, des Stellorgans oder Elastomerdichtungen 8 und 9 stehen. Das elektromagnetseitige Gewinde 4 und das stellorganseitige Gewinde 5 sind, wie in Fig. 3 dargestellt, axial in beiden Richtungen von Kammern 6 und 7 benachbart, die durch überlappende Zylinderflächen 11 und 13 elektromagnetseitig sowie durch weitere überlappende Zylinderflächen 12 und 14 stellorganseitig auf den jeweils von den Gewinden abgewandten Seiten abschlossen werden. Die jeweils überlappenden Zylinderflächen weisen kein oder nur ein sehr geringes Radialspiel zueinander auf und richten auch den Elektromagneten und das Stellorgan zueinander hochgenau aus.
Die Zylinderflächen 11 und 13 sind Flächen eines Bestandteils des Elektromagneten, und die Zylinderflächen 12 und 14 sind Flächen eines Bestandteils des Stellorgans.
In ihrem Zusammenwirken bilden die Zylinderflächen 11 und 12 einerseits und 13 und 14 andererseits Spaltdichtungen.

Während einer ersten Phase des Einschraubens des Stellorgans 2 in den Elektromagneten 1 sind die Kammern 6 und 7, wie in Fig. 2 dargestellt, zu der von den Gewinden abgewandten Seite hin offen, und in einer zweiten Phase des Einschraubens werden die Kammern durch eine bei dem Einschrauben zunehmende Überlappung der Zylinderfläche 11 mit der Zylinderfläche 12 und der Zylinderfläche 13 mit der Zylinderfläche 14 von den Elastomerdichtungen 8, 9 oder den Funktionsräumen der Bauteile abgetrennt.

Die Elastomerdichtung 8 dichtet den Spulenraum 15 des Elektromagneten 1 gegen den ersten Arbeitsanschluss 16 des Stellorgans 2 und gegen die Umgebung ab, und außerdem den Arbeitsanschluss 16 gegen die Umgebung. Dabei wird eine stellorganseitige konische Fläche 17 genutzt, um die Elastomerdichtung an die elektromagnetseitige Begrenzungsfläche 19 des Dichtungsraums 18 anzudrücken.

Die Elastomerdichtung 9 dichtet den Ankerraum 10 des Elektromagneten 1 gegen den Spulenraum 15 des Elektromagneten 1 ab.

Beim Fügen und Befestigen von zwei Bauteilen des erfindungsgemäßen Geräts werden bei einem Einschrauben des Stellorgans 2 in den Elektromagneten 1 mittels des stellorganseitigen Gewindes 5 in das elektromagnetseitige Gewinde 4 die Mehrzahl der Partikel, die beim Einschrauben gelöst werden, in den Kammern 6 und 7 zwischen den beiden Bauteilen aufgenommen. Am Ende des Einschraubvorgangs werden die Partikel, die eine durch die Spalthöhen festlegbare Mindestgröße überschreiten, durch die Spaltdichtungen zwischen den Zylinderflächen 11 und 12 einerseits sowie 13 und 14 andererseits daran gehindert, in den Einbauraum der Elastomerdichtungen 8 und 9 oder in die Funktionsräume der Bauteile einzudringen.

### Liste der Bezugszeichen

- 1.: Elektromagnet
- 2.: Stellorgan
- 3.: Einbaubohrung
- 4.: Gewinde magnetseitig
- 5.: Gewinde stellorganseitig
- 6.: Kammer außen
- 7.: Kammer innen
- 8.: Elastomerdichtung außen
- 9.: Elastomerdichtung innen
- 10.: Ankerraum
- 11.: Zylinderfläche, magnetseitig außen
- 12.: Zylinderfläche, stellorganseitig, außen
- 13.: Zylinderfläche, magnetseitig, innen
- 14.: Zylinderfläche, stellorganseitig, außen
- 15.: Spulenraum
- 16.: Arbeitsanschluss des Stellorgans
- 17.: Konische Fläche
- 18.: Dichtungsraum
- 19.: Begrenzungsfläche

## Patentansprüche

1. Gerät bestehend aus einem Elektromagnet (1) mit Spulenraum (15) und einem Stellorgan (2), das ein Ventil oder eine Kupplung ist, wobei der Elektromagnet (1) und das Stellorgan (2) mittels Gewinden (4, 5) miteinander verbunden sind und diese Gewinde (4, 5) in Nachbarschaft und fluidisch verbunden sind einerseits
mit einer ersten Elastomerdichtung (8) und andererseits mit einer zweiten Elelastomerdichtung (9),
und wobei
die Gewinde (4, 5) axial in beiden Richtungen von Kammern (6, 7) benachbart sind, die durch stellorganseitige Zylinderflächen (12, 14) einerseits sowie durch elektromagnetseitige Zylinderflächen (11, 13) andererseits auf den jeweils von den Gewinden (4, 5) abgewandten Seiten der Kammern (6, 7) abgeschlossen werden, wobei die stellorganseitigen Zylinderflächen (12, 14) und die elektromagnetseitigen Zylinderflächen (11, 13) kein oder nur ein geringes Radialspiel zueinander aufweisen derart, dass die sich überlappenden Zylinderflächen einerseits des Gewindes (11,12) und die sich überlappenden Zylinderflächen andererseits des Gewindes (13,14) in ihrem Zusammenwirken jeweils Spaltdichtungen bilden,
und wobei eine stellorganseitige konische Fläche (17) die erste Elastomerdichtung (8) an eine elektromagnetseitige Begrenzungsfläche (19) eines Dichtungsraums (18) andrückt,
wobei die zweite Elastomerdichtung (9) zwischen einer Begrenzungsfläche des Elektromagneten (1) und einer Begrenzungsfläche des Stellorgans (2) angeordnet ist und derart, dass sie einen Ankerraum (10) des Elektromagneten (1) gegen den Spulenraum (15) des Elektromagneten (1) und die mit dem Spulenraum (15) fluidisch verbundene elektromagnetseitige Kammer (7) abdichtet.

## Claims

1. Device comprising an electromagnet (1) with a coil space (15) and an actuating element (2), which is a valve or a clutch, wherein the electromagnet (1) and the actuating element (2) are connected to one another by means of threads (4, 5), and these threads (4, 5) are in the vicinity of and are fluidically connected to on the one hand a first elastomer seal (8) and on the other hand a second elastomer seal (9), and wherein
the threads (4, 5) have adjacent to them axially in both directions chambers (6, 7), which are closed off on the sides of the chambers (6, 7) that are respectively facing away from the threads (4, 5) on the one hand by cylinder surfaces (12, 14) on the actuating element side and on the other hand by cylinder surfaces (11, 13) on the electromagnet side, wherein the cylinder surfaces (12, 14) on the actuating element side and the cylinder surfaces (11, 13) on the electromagnet side have no radial play or only a small amount of radial play in relation to one another in such a way that, in their interaction, the overlapping cylinder surfaces on the one hand of the thread (11, 12) and the overlapping cylinder surfaces on the other hand of the thread (13, 14) respectively form gap seals,
and wherein a conical surface (17) on the actuating element side presses the first elastomer seal (8) against the delimiting surface (19) on the electromagnet side of a sealing space (18),
wherein the second elastomer seal (9) is arranged between a delimiting surface of the electromagnet (1) and a delimiting surface of the actuating element (2) and is arranged in such a way that it seals off an armature space (10) of the electromagnet (1) from the coil space (15) of the electromagnet (1) and the chamber (7) on the electromagnet side that is fluidically connected to the coil space (15).

## Revendications

1. Appareil constitué d'un électroaimant (1) doté d'un espace de bobine (15) et d'un actionneur (2), qui est une soupape ou un accouplement, l'électroaimant (1) et l'actionneur (2) étant connectés l'un à l'autre par des filetages (4, 5) et ces filetages (4, 5) étant connectés à proximité et fluidiquement d'une part à un premier joint élastomère (8) et d'autre part à un deuxième joint élastomère (9), et
les filetages (4, 5) étant adjacents axialement dans les deux directions à des chambres (6, 7) qui sont fermées d'une part par des surfaces cylindriques (12, 14) du côté de l'actionneur et d'autre part par des surfaces cylindriques (11, 13) du côté de l'électroaimant sur les côtés des chambres (6, 7) opposés à chaque fois aux filetages (4, 5), les surfaces cylindriques (12, 14) du côté de l'actionneur et les surfaces cylindriques (11, 13) du côté de l'électroaimant ne présentant pas de jeu radial l'une par rapport à l'autre ou seulement dans une faible mesure, de telle sorte que d'une part les surfaces cylindriques du filetage (11, 12) se chevauchant et d'autre part les surfaces cylindriques du filetage (13, 14) se chevauchant forment, par leur coopération, à chaque fois des joints à fente, et une surface conique (17) du côté de l'actionneur pressant le premier joint élastomère (8) contre une surface de limitation (19) du côté de l'électroaimant d'un espace d'étanchéité (18), le deuxième joint élastomère (9) étant disposé entre une surface de limitation de l'électroaimant (1) et une surface de limitation de l'actionneur (2) et de telle sorte qu'il étanchéifie un espace d'induit (10) de l'électroaimant (1) vis-à-vis de l'espace de bobine (15) de l'électroaimant (1) et la chambre (7) du côté de l'électroaimant connectée fluidiquement à l'espace de bobine (15).
